# EUROPEAN PATENT APPLICATION

(11) **EP 4 593 167 A2**
(43) Date of publication of application: **30.07.2025**
(21) Application number: 25154213.0
(22) Date of filing: 27.01.2025
(51) Int. Cl.: H01M 50/107, H01M 50/533, H01M 50/536

(54) **CURRENT COLLECTOR WITH EMBOSSED BUMPS**

(30) Priority: 29.01.2024 CN 202420222477 U
(71) Applicant: Techtronic Cordless GP, Anderson, SC 29621 (US)
(72) Inventor: WU, Kun, Dongguan City, Guangdong Province (CN); GENG, Dan, Dongguan City, Guangdong Province (CN); WU, Jia Qing, Dongguan City, Guangdong Province (CN)
(74) Representative: Meissner Bolte Partnerschaft mbB

(57) **Abstract**

Current collector (100) comprising a central region (113) and edge regions (114), the central region being used for welding to the housing of a battery, wherein the central region (113) is provided with a plurality of embossed bumps (115), the embossed bumps (115) being in a cross array distribution.

## Description

### TECHNICAL FIELD

The present utility model relates to a current collector for a battery, more particularly, to a current collector with embossed bumps.

### BACKGROUND

Batteries play an important role in supplying power for many daily electrical devices. They are mainly composed of a cap, a housing, a winding core, an electrolyte and a current collector. The active substances in the battery winding core undergo electrochemical reactions, thereby outputting electrical energy to supply power for electrical devices. The current collector collects the current generated by the active substances in the battery to form a larger current for external output. Generally, in order to maximize the output efficiency of the battery, the current collector needs to be in full contact with the active substance as much as possible. Meanwhile, in order to maintain the assembly stability of the battery and increase the current capacity between the connection structures, the current collector is combined with the battery winding core and the battery housing by welding. The welding process often generates a relatively large internal resistance at the welding point of the current collector, which in turn affects the power output of the battery.

In order to improve the contact performance of the current collector as much as possible, increase the welding firmness, and reduce the dissipation of electric energy due to the higher internal resistance, there is a need to provide a new design solution for current collector to solve at least part of the above issues.

### SUMMARY

The purpose of the present utility model is to provide a current collector and a cylindrical battery comprising the same, which can achieve increased welding firmness, reduced internal resistance, and improved contact performance of the current collector, thereby reducing the dissipation of electrical energy by the connection structure under working conditions.

According to one aspect of the present utility model, a current collector with embossed bumps for a battery is provided.

The current collector comprises a central region and an edge region, the center region is used for welding to a housing of the battery.

The central region is provided with a plurality of embossed bumps, the embossed bumps are in a cross array distribution.

In one embodiment, the cross array distribution is that the number of embossed bumps in each row is sequentially cross-distributed in odd and even numbers.

In one embodiment, the embossed bumps in the odd number row are located on the symmetry axis of the two embossed bumps in the even number row.

In one embodiment, the cross array distribution is that three adjacent embossed bumps are distributed in an equilateral triangle.

In one embodiment, the number of the embossed bumps in the central region ranges from 15 to 100, preferably from 30 to 90, and more preferably from 45 to 60.

In one embodiment, the diameter of the embossed bumps in the central region ranges from 0.3 mm to 0.8 mm, preferably from 0.4 mm to 0.7 mm, and more preferably from 0.5 mm to 0.6 mm.

In one embodiment, the distance between the centers of the embossed bumps in the central region ranges from 0.4 mm to 1.2 mm, preferably from 0.5 mm to 1.1 mm, and more preferably from 0.55 mm to 1.00 mm.

In one embodiment, the height of the embossed bumps ranges from 0.05 mm to 1.00 mm, preferably from 0.10 mm to 0.80 mm, and more preferably from 0.15 mm to 0.60 mm.

In one embodiment, the embossed bumps are cylindrical, conical, or of any protruding shape between cylindrical and conical.

In one embodiment, the current collector comprises at least three edge regions.

In one embodiment, the embossed bumps are arranged in a plurality of parallel rows, and the embossed bumps in adjacent rows have overlapping portions in a parallel direction.

According to another aspect of the present utility model, a cylindrical battery is provided, comprising the current collector as described above.

In one embodiment, the cylindrical battery further comprises,
a winding core, one pole of which being welded to the first side of the current collector;
a housing comprising a cylindrical side wall and a bottom cover, the bottom cover being welded to the second side of the current collector; wherein the welding occurs at the embossed bumps in the central region of the second side.

It should be understood that the general description above and the detailed description below are exemplary and are intended only to provide an overview or framework for understanding the nature and features of the utility model and the appended claims. As non-limiting examples, various features of the utility model can be combined with each other according to the following embodiments.

### BRIEF DESCRIPTION OF THE DRAWINGS

In order to better understand the above and other purposes, features, advantages and functions of the present utility model, reference may be made to the preferable embodiments shown in the drawings. The same reference numbers in the drawings refer to the same components. It should be understood by those skilled in the art that the drawings are intended to schematically illustrate the preferable embodiments of the present utility model and have no limiting effect on the scope of the present utility model, and the components in the drawings are not drawn to scale.
FIG. 1 shows a current collector with embossed bumps according to some embodiments of the present utility model, wherein the embossed bumps in the central region have the 4×4 bump array (aligned type);
FIG. 2 shows a current collector with embossed bumps according to other embodiments of the present utility model, wherein the embossed bumps in the central region have a 7×8 bump array (crossed type);
FIG. 3 shows a side view of a current collector according to an embodiment of the present utility model;
FIG. 4 shows a plan view of a welding portion comprising embossed bumps in the current collector of FIG. 2 according to an embodiment of the present utility model;
FIG. 5 shows an exploded view of a cylindrical battery according to an embodiment of the present utility model;
FIG. 6 shows a cross-sectional perspective view after a welding operation is completed according to an embodiment of the present utility model.

### Reference numbers:

- 100: current collector
- 111: first side
- 112: second side
- 113: central region
- 114: edge region
- 115: embossed bump
- 200: winding core
- 300: housing
- 301: bottom cover

### DETAILED DESCRIPTION

Now with reference to the drawings, the specific embodiments of the present utility model are described in detail. What is described herein is only the preferable embodiment of the present utility model. Other ways to implement the present utility model based on the preferable embodiment would readily occur to those skilled in the art, and the other ways also fall within the scope of the present invention.

Unless otherwise explicitly described, no particular orientation is intended for any device. Therefore, under the circumstance that any device claim does not actually recite the order or orientation of individual components, or that no additional specific statements are provided in the claims or description that the steps must be limited to a specific order, or that no specific order or orientation of the components of the device is described, no order or orientation is intended to be inferred in any aspect.

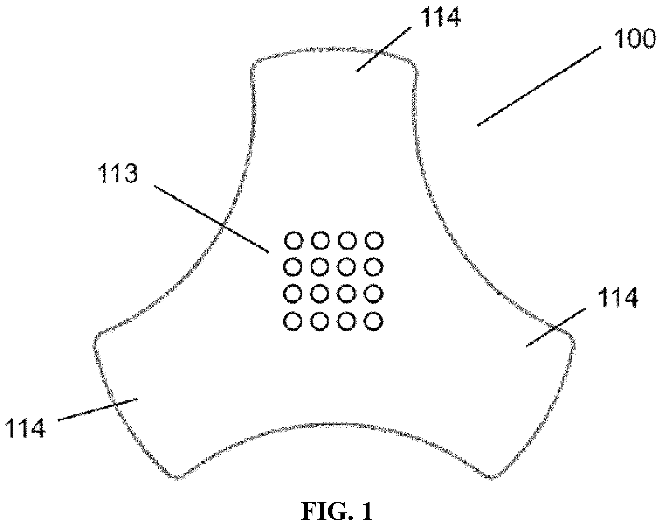

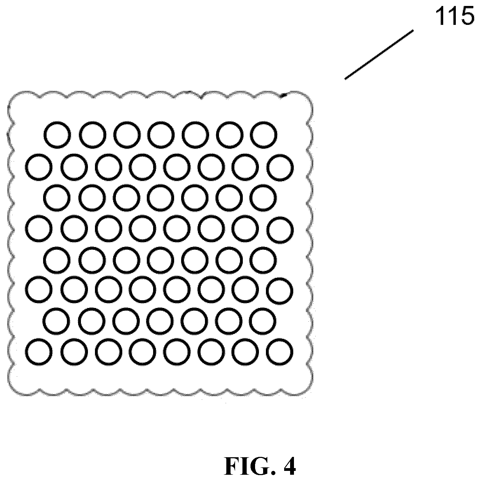

FIGS. 1 to 6 show a current collector with embossed bumps and a cylindrical battery using the same according to the utility model. First of all, it should be noted that the directional terms and positional terms in the utility model should be understood as relative directions and positions, rather than absolute directions and positions. The directional terms and positional terms in the utility model can be explained with reference to the exemplary structures shown in FIGS. 1 to 6.

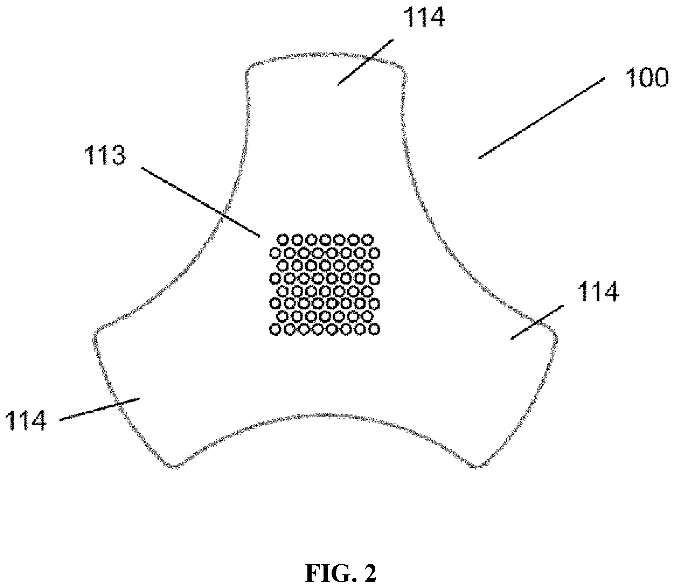

The inventor has found in the practice of production research that, the welding process of the current collector would bring about a large internal resistance, so that a large amount of electrical energy will be converted into heat energy dissipation during actual application, thereby affecting the battery output performance. In order to ensure welding stability, improve the current collection capacity, and minimize the dissipation of electric energy due to internal resistance, in response to the above technical problems, the utility model provides a current collector with embossed bumps, which can serve as micro electrodes. During the welding and assembly process, these embossed bumps would contact the steel at the bottom of the housing, and these embossed bumps would melt first when the welding current passes through. By arranging the embossed bumps in a crossed dense arrangement (see FIG. 2), the welding pin can press more embossed bumps during the welding process, and the number is more stable, thereby improving the consistency of welding. Moreover, upon verification, compared with the embossed bumps with aligned dense arrangement (see FIG. 1), the embossed bumps with crossed dense arrangement can increase the melting area of the weld by 24%, thereby increasing the welding strength at the bottom, and meanwhile reduce the internal resistance of the bottom welding point by 22%, thereby reducing the dissipation of electrical energy due to the internal resistance.

Referring now to FIGS. 2-6, according to one aspect of the utility model, a current collector with embossed bumps is provided, wherein the current collector 100 comprises a central region 113 and an edge region 114; the central region 113 is provided with a plurality of embossed bumps 115, and the embossed bumps are in a cross array distribution. In one embodiment, the cross array distribution is that the number of embossed bumps 115 in each row is sequentially cross-distributed in odd and even numbers, for example, as shown in FIG. 2, it is 7-8-7-8-7-8-7-8-7-8 from top to bottom. As a preferable embodiment, the embossed bumps 115 in the odd number row are located on the symmetry axis of the two embossed bumps 115 in the even number row. As a preferable embodiment, the cross array distribution is that three adjacent embossed bumps 115 are distributed in a substantially equilateral triangle. In one embodiment, as shown in FIG. 2, the embossed bumps 115 are substantially square. It should be understood that, it is also possible to arrange the embossed bumps as common geometric shapes, e.g., circles, hexagons, etc., as long as the above requirements are met.

In some embodiments, multiple parallel rows of embossed bumps are staggered with each other, and the embossed bumps in adjacent rows have overlapping portions in a parallel direction. In other word, the embossed bumps extend beyond the connecting line of the edges of adjacent rows of embossed bumps. This can provide more embossed bumps in a limited space, thereby increasing the welding area and reducing the resistance after welding. Of course, alternatively, in some other embodiments, there may have no overlapping between adjacent rows of embossed bumps in a parallel direction.

The current collector 100 of the present utility model is welded and connected to the winding core or other electrical devices by the embossed bumps arranged on the surface. The bumps of the embossed bumps can be heated simultaneously using a columnar welding pin, and the electrodes can melt the bumps at the same time, thereby achieving the welding of the current collector, which can improve the production efficiency and save the processing time.

Referring now to FIGS. 2-4, a specific embodiment of the bumps distribution in the central region 113 of the current collector 100 is shown. The number and diameter of the embossed bumps 115, as well as the distance between the centers of the two embossed bumps 115 can be configured according to the given application requirements, and the configuration is for exemplary purposes and should not be considered as limiting the utility model. For example, in one embodiment, the number of the embossed bumps 115 in the central region 113 ranges from 15 to 100, preferably from 30 to 90, and more preferably from 45 to 60. In one embodiment, the diameter of the embossed bumps 115 in the central region 113 ranges from 0.3 mm to 0.8 mm, preferably from 0.4 mm to 0.7 mm, and more preferably from 0.5 mm to 0.6 mm. In one embodiment, the distance between the centers of the embossed bumps 115 in the central region 113 ranges from 0.4 mm to 1.2 mm, preferably from 0.5 mm to 1.1 mm, and more preferably from 0.55 mm to 1.00 mm.

Furthermore, the height of the embossed bumps 115 would affect the welding pressure, the welding time, the temperature control, etc. of the welding pin. In one embodiment, the height of the embossed bumps 115 ranges from 0.05 mm to 1.00 mm, preferably from 0.10 mm to 0.80 mm, and more preferably from 0.15 mm to 0.60 mm. The bumps of such height are convenient for arbitrarily controlling the melting, and on the other hand, it can also ensure the firmness of the welding.

Regarding the three-dimensional shape of the embossed bumps 115, they can be cylindrical, conical, or of any protruding shape between cylindrical and conical, which could be easily obtained by those skilled in the art based on experience. The bumps are obtained by a stamping process commonly used in the art, which is easier to process and has a lower processing cost.

In addition, as shown in FIGS. 2-4, on the other hand, the current collector 100 comprises at least one edge region 114 distributed outside the current collector 100 over the central region 113. The current collector 100 comprises preferably at least two edge regions 114, more preferably, at least three edge regions 114, for welding to the winding core.

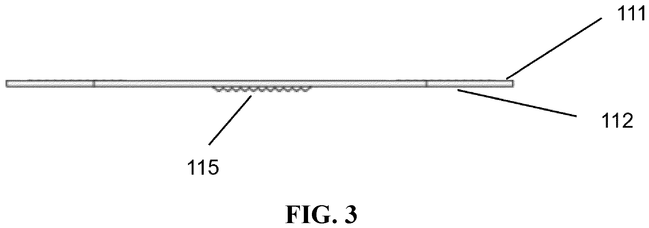

Please continue to refer to FIG. 3, in one embodiment, the current collector 100 has a first side 111 for contacting the winding core 200 and a second side 112 opposite to the first side 111. In a conventional battery structure, the second side 112 is usually used to contact the housing of the battery. However, in some other embodiments, the second side 112 can also be used to contact other electrical components within the battery. As a preferable embodiment, the embossed bumps 115 of the central region 113 are located at the second side 112, that is, for contacting the housing of the battery.

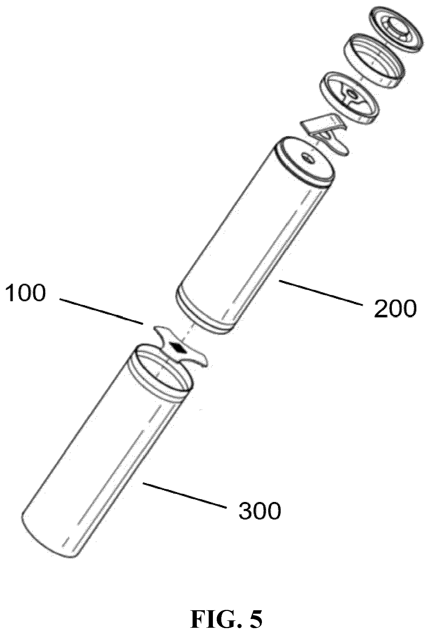

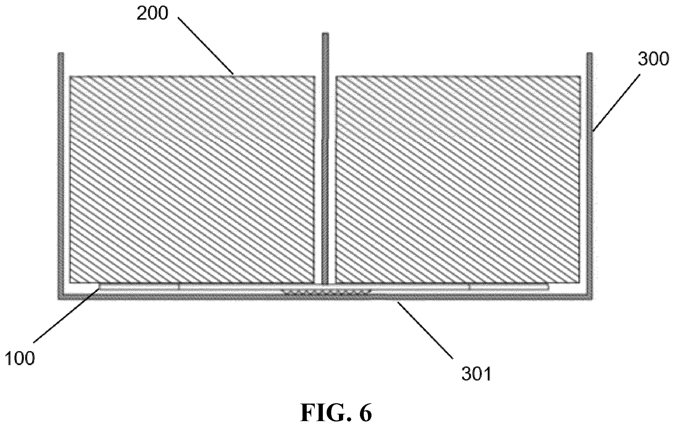

As shown in FIG. 5 and FIG. 6, according to another aspect of the present utility model, a cylindrical battery is provided, wherein the battery comprises: the current collector 100 as described above.

Further, according to another aspect of the utility model, a cylindrical battery is provided, wherein the battery further comprises: a winding core 200, one pole of which being welded to the first side 111 of the current collector 100; a housing 300 comprising a cylindrical side wall and a bottom cover 301, the bottom cover 301 being welded to the second side 112 of the current collector 100; wherein the welding occurs at the embossed bumps 115 in the central region 113 of the second side 112.

### Specific Examples:

### Example 1: 4×4 array (aligned)

As a comparative example, the embossed bumps with a 4×4 aligned array is designed in the center region, as shown in FIG. 1. The array contains 16 embossed bumps in total, is arranged in a square shape with the side length of 3.6mm. Each of the embossed bumps has the same three-dimensional shape, and the bottom surface of each embossed bump is circular with a diameter of 0.6mm. In the length direction, the distance between the centers of adjacent embossed bumps is 1.0mm. At this time, when a welding pin with a welding diameter of 2mm is adopted, 4-6 embossed bumps can be covered at the same time for welding processing.

### Example 2: 7×8 array (crossed)

As an example of the present utility model, the embossed bumps with a 7×8 crosed array is designed in the central region, as shown in FIG. 2. The array contains 60 embossed bumps in total, and the embossed bumps are arranged in an alternating form of 7-8-7-8-7-8-7-8 in each row. The array is arranged in a rectangular shape with the side length of 3.8mm×4.0mm. Each of the embossed bumps has the same three-dimensional shape, and the bottom surface of each embossed bump is circular with a diameter of 0.5mm. The distance between the centers of adjacent embossed bumps is 0.55mm, 0.58mm, and 0.62mm. At this time, when a welding pin with a welding diameter of 2mm is adopted, 14-19 embossed bumps can be covered for processing.

By performing welding operations under the same welding parameters, the welding effect parameters of the two are evaluated. As shown in Table 1:

**Table 1. Measurement of Welding Effect Parameters under Same Welding Parameters**

| Test Items | Example 1 | Example 2 | Remark |
|---|---|---|---|
| Bottom internal resistance | 0.32 mΩ | 0.25 mΩ | The lower the internal resistance, the better the battery performance. |
| Residual area | 1.42 mm² | 1.91 mm² | The higher the numerical value, the better the welding firmness |
| Bottom welding stress | 67 N | 72 N | |
| Current collector welding stress | 26 N | 32 N | |
| Current collector welding residual points (Average) | 27.6 pcs | 29.7 pcs | |

Upon measurement, the internal resistance of the battery with the current collector of Example 1 at the bottom of the battery cell was 0.32mQ. While after being replaced with the current collector of Example 2, the internal resistance at the bottom of the battery cell was 0.25mQ, which was reduced by 22%.

The welding tension, residual area and residual point of the current collector of Example 2 are also significantly higher than those of the current collector of Example 1. At a parameter of 3.6kA, the welding tension of the current collectors of Example 1 and Example 2 complies with the specification, but the current collector of Example 1 has 1/5 of the battery without residue.

Under the welding parameter of 2ms@3.7KA, the residual area of the current collector of Example 1 is only 1.266mm², and the molten core effect is poor. The residual area of the current collector of Example 2 is 1.663mm², which indicates that the residual area of welding is increased by 24%, and has a better molten core effect. When the welding parameters are higher than 3.8kA, air holes will appear in the welding core, which is not conducive to welding operation.

The above description of various embodiments of the present utility model is provided to those skilled in the art for the purpose of description. It is not intended that the present utility model would be exclusive or limited to a single disclosed embodiment. As above, those skilled in the art who have been taught above would understand the various substitutions and variations of the present utility model. Therefore, although some alternative embodiments are specifically described, it will be apparent to those skilled in the art or it will be relatively easy to develop other embodiments. The present utility model is intended to include all substitutions, modifications and variations of the present utility model described herein, as well as other embodiments that fall within the spirit and scope of the present utility model described above.

## Claims

1. A current collector with embossed bumps for a battery, **characterized in that**,
the current collector (100) comprises a central region (113) and an edge region (114), the center region (113) is used for welding to a housing of the battery,
the central region (113) is provided with a plurality of embossed bumps (115), the embossed bumps are in a cross array distribution.

2. The current collector according to claim 1, **characterized in that**, the cross array distribution is that the number of embossed bumps (115) in each row is sequentially cross-distributed in odd and even numbers.

3. The current collector according to claim 2, **characterized in that**, the embossed bumps (115) in the odd number row are located on the symmetry axis of the two embossed bumps (115) in the even number row.

4. The current collector according to any one of the previous claims, in particular either claim 2 or claim 3, **characterized in that**, the cross array distribution is that three adjacent embossed bumps (115) are distributed in an equilateral triangle.

5. The current collector according to any one of the previous claims, **characterized in that**, the number of the embossed bumps (115) in the central region (113) ranges from 15 to 100, preferably from 30 to 90, and more preferably from 45 to 60.

6. The current collector according to any one of the previous claims, **characterized in that**, the diameter of the embossed bumps (115) in the central region (113) ranges from 0.3 mm to 0.8 mm, preferably from 0.4 mm to 0.7 mm, and more preferably from 0.5 mm to 0.6 mm.

7. The current collector according to any one of the previous claims, **characterized in that**, the distance between the centers of the embossed bumps (115) in the central region (113) ranges from 0.4 mm to 1.2 mm, preferably from 0.5 mm to 1.1 mm, and more preferably from 0.55 mm to 1.00 mm.

8. The current collector according to any one of the previous claims, **characterized in that**, the height of the embossed bumps (115) ranges from 0.05 mm to 1.00 mm, preferably from 0.10 mm to 0.80 mm, and more preferably from 0.15 mm to 0.60 mm.

9. The current collector according to any one of the previous claims, **characterized in that**, the embossed bumps (115) are cylindrical, conical, or of any protruding shape between cylindrical and conical.

10. The current collector according to any one of the previous claims, **characterized in that**, the current collector (100) comprises at least three edge regions (114).

11. The current collector according to any one of the previous claims, in particular claim 2, **characterized in that**, the embossed bumps (115) are arranged in a plurality of parallel rows, and the embossed bumps in adjacent rows have overlapping portions in a parallel direction.

12. A cylindrical battery, **characterized by** comprising
the current collector (100) according to any one of claims 1 to 11.

13. The cylindrical battery according to claim 12, **characterized by** further comprising
a winding core (200), one pole of which being welded to the first side (111) of the current collector (100);
a housing (300) comprising a cylindrical side wall and a bottom cover (301), the bottom cover (301) being welded to the second side (112) of the current collector (100); wherein the welding occurs at the embossed bumps (115) in the central region (113) of the second side (112).
